(19) Europäisches Patentamt
European Patent Office
Office européen des brevets

(11) **EP 4 586 536 A1**

(12) **EUROPEAN PATENT APPLICATION**

(43) Date of publication:
**16.07.2025 Bulletin 2025/29**

(51) International Patent Classification (IPC):
**H04L 5/00** *(2006.01)* **G01S 13/42** *(2006.01)*

(21) Application number: **24215421.9**

(52) Cooperative Patent Classification (CPC):
**H04L 5/0007; G01S 13/42**

(22) Date of filing: **26.11.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 US 202318536543**

(71) Applicant: **NXP B.V.**
**5656 AG Eindhoven (NL)**

(72) Inventors:
 • **Oliari Couto Dias, Vinicius**
   **5656AG Eindhoven (NL)**
 • **Kiyani, Nauman Farooq**
   **5656AG Eindhoven (NL)**
 • **Pandharipande, Ashish**
   **5656AG Eindhoven (NL)**
 • **Van Houtum, Wilhemus Johannes**
   **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **RECONFIGURABLE SENSING FRAMES FOR SENSING AND COMMUNICATION SYSTEMS**

(57) A communication system reserves a first portion of a transmitted frame for communication symbols and a second portion of the transmitted frame of symbols for a plurality of radar sensing symbols. The communication symbols are of variable length. The communication system sets a position of a first symbol of the radar sensing symbols so that the plurality of radar sensing symbols are equidistant in the frame of symbols

**FIG. 1**

## Description

### BACKGROUND

Radar systems are used in a variety of devices to detect and identify objects and determine characteristics of the objects such as their range, velocity, direction, or material. For example, some automobiles rely on radar to detect information about nearby objects, and thereby support autonomous driving or other driver assistance functions. Furthermore, some devices that employ radar systems also employ wireless communication systems to send and receive data over a network. For example, some automobiles include a cellular or other wireless communication system to send and receive data (e.g., system update data, map data, and voice call data) to and from a wireless network.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a communication system that reserves symbols in a communication frame for radar samples in accordance with some embodiments.

FIG. 2 is a diagram illustrating an example of the communication system of FIG. 1 reserving symbols in a communication frame for radar samples in accordance with some embodiments.

FIG. 3 is a diagram illustrating a plurality of communication symbols of the communication frame of FIG. 2 in accordance with some embodiments.

FIG. 4 is a diagram illustrating an example of the communication system of FIG. 1 positioning radar samples in a set of frames in accordance with some embodiments.

FIG. 5 is a diagram illustrating an example of radar samples being placed by the communication system of FIG. 1 in different positions within different frames in accordance with some embodiments.

FIG. 6 is a diagram illustrating an example of the communication system of FIG. 1 omitting radar samples in selected frames to increase communication bandwidth in accordance with some embodiments.

FIG. 7 is a flow diagram of a method of setting the position of radar samples in a set of reserved radar symbols at a communication system in accordance with some embodiments.

### DETAILED DESCRIPTION

Some devices employ both a radar system to detect objects in proximity to the device, and a communication system to send and receive data from a network. For example, some automobiles employ a radar system to detect the presence of nearby objects, and thus support features such as parking assistance, adaptive cruise control, and the like. In addition, these automobiles employ a communication system to send and receive data from a network (e.g., a communication network that provides connectivity to a wide area network such as the Internet.) For example, some automobiles include a Fifth Generation (5G) mobile network communication system to send and receive data via a 5G network. To conserve system resources, it is desirable for devices to combine at least some aspects of the radar and communication systems. For example, both radar systems and communication systems employ transmit and receive antennae, and combining the systems to use the same transmit and receive antennae reduces the total number of antennae employed by the device.

One approach to integrating the radar and communication systems is to combine the data to be communicated over the network (referred to herein as "communication data") and the radar data into combined frames of data, and to transmit the combined frames of data with the same transmitted circuitry. However, combining the radar and communication data in this way potentially impacts the system's radar performance, communication performance, or both. For example, in order for a radar system to accurately detect the characteristics of detected objects, such as object velocity, the radar samples should be equidistant in the transmitted stream of data (that is, the interval of time should be the same between each consecutive set of radar samples). However, for at least some communication systems, the content of the communication data can vary over time, such that it is difficult to maintain equidistance of the radar samples in a combined data stream. For example, 5G communication data (that is, data that complies with a 5G communication standard) typically includes cyclic prefixes (CPs) of different sizes in order to meet the 5G requirement of a fixed duration of a frame. Accordingly, combining radar samples with 5G communication symbols in a data stream can result in the radar samples having varying distances between successive sample sets in the data stream, making it difficult for the radar system to accurately determine the velocity of detected objects.

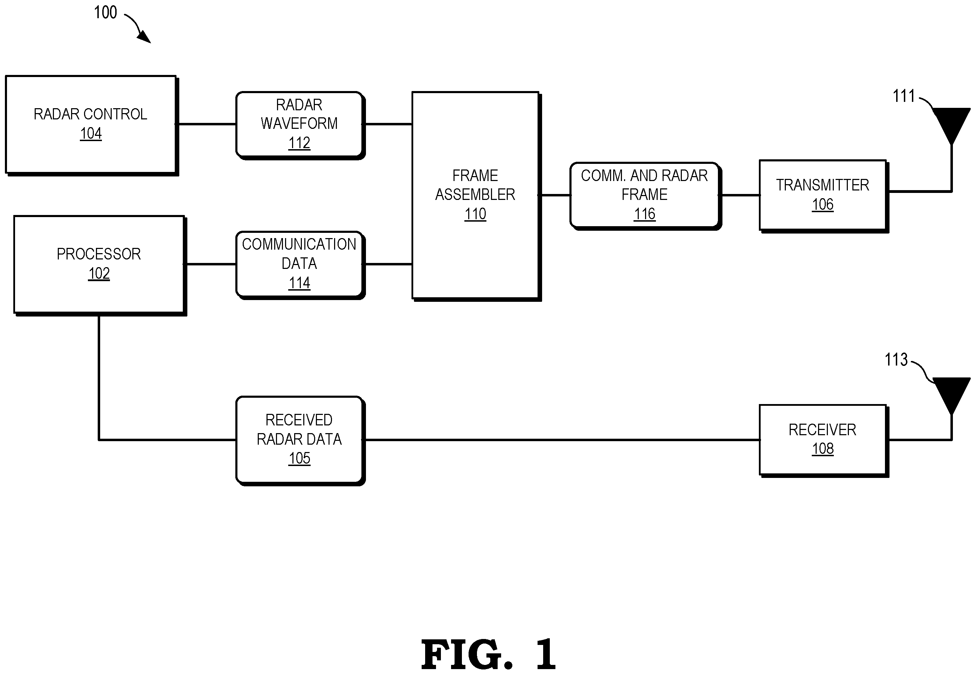

FIGs 1-7 illustrate techniques for integrating radar and wireless communication systems while maintaining the ability of the radar system to accurately determine the characteristics of detected objects. The techniques include combining communication data and radar samples into frames, and transmitting the frames with a set of antennas. The combined communication system allocates symbols of the frames to radar samples in such a way as to ensure equidistance between at least a subset of the radar samples. For example, in some embodiments the communication system reserves an "extra" symbol for the radar samples. That is, the communication system reserves more symbols than are needed to store all of the radar samples. The communication system adjusts the position of the samples within each set of reserved symbols so that the samples are equidistant over successive sets of reserved symbols. This ensures that the communication system can accurately determine the velocity of detected objects.

FIG. 1 illustrates a communication system 100 in accordance with some embodiments. The communication system 100 is generally configured to transmit a stream of data, wherein the data stream includes a combination of wireless communication data and radar samples used to detect characteristics of objects in proximity to the communication system 100. Accordingly, in different embodiments the communication system 100 is part of any of a number of devices that employ both radar and wireless communications. For purposes of description, it is assumed that the communication system 100 is part of an automobile.

To support both radar sensing and wireless transmission and reception of data, the communication system 100 includes a processor 102, a radar control module 104, a transmitter 106, a receiver 108, and a frame assembler 110. The transmitter 106 is a set of circuits collectively configured to transmit a stream of data via a set of antennae (e.g., antenna 111). Accordingly, in some embodiments, the transmitter 106 includes the set of circuits corresponding to a physical (or PHY) layer for transmitting one or more signals. Thus, in different embodiments the transmitter 106 includes one or more filters, digital to analog converters, amplifiers, mixers, and other circuits to receive a set of frames for transmission, to process those frames into a stream of data, and to transmit the stream of data via one or more signals. In some embodiments, the transmitter 106 is configured to generate the streams of data and the corresponding signals according to a specified communication standard, such as a 5G communications standard.

The receiver 108 is a set of circuits collectively configured to receive signals via a set of antennae (e.g., antenna 113). Accordingly, in some embodiments, the receiver 108 includes the set of circuits corresponding to a physical (or PHY) layer for receiving one or more signals. Thus, in different embodiments the receiver 108 includes one or more filters, amplifiers, mixers, analog-to-digital converters, and other circuits to receive signals and to process those received signals into a set of data, designated received radar data 105. The received radar data 105 represents signals received in response to transmission of radar signals from the transmitter 106, and thus indicates the characteristics of any reflected signals resulting from the transmitted signal. It will be appreciated that while the embodiment of FIG. 1 illustrates a single transmitter antenna 111 and a single receiver antenna 113, in other embodiments the communication system 100 includes multiple transmitter antennae and multiple receiver antennae.

The processor 102 is a processor device, such as a central processing unit (CPU) configured to execute instructions (e.g., applications) to carry out the operations described further herein. In other embodiments, the processor 102 represents dedicated circuitry designed and configured to perform the operations described further herein. For example, in different embodiments the processor 102 represents a hardcoded circuit (e.g., a corresponding portion of an application specific integrated circuit (ASIC) or a set of logic gates, storage elements, and other components selected and arranged to execute the ascribed operations), a programmable circuit (e.g., a corresponding portion of a field programmable gate array (FPGA) or programmable logic device (PLD)) that performs the operations described further herein.

Examples of the operations executed by the processor 102 includes generating data, designated communication data 114, that is to be communicated wirelessly according to a wireless communication standard, such as a 5G communication standard. For example, in some embodiments the processor 102 generates the communication data to be communicated wirelessly via a specified orthogonal frequency-division multiplexing (OFDM) scheme. In at least some embodiments, the OFDM scheme specifies the size and other characteristics of frames to be transmitted, and further specifies a number of symbols to be transmitted in each frame. Thus, for example, in some embodiments the communication system 100 implements a 5G OFDM scheme wherein each frame is a ten millisecond (ms) frame, with each frame including a specified number of slots (e.g. ten slots, twenty slots, forty slots, or eighty slots) and each slot includes fourteen OFDM symbols, and the processor 102 generates the communication data 114 as a set of symbols to be communicated via the transmitted OFDM stream.

In addition to generating the communication data 114, the processor 102 is configured to receive radar data, such as received radar data 105. The received radar data 105 represents data received by the communication system 100 in response to transmitted radar sense signals, as described further below. In other words, the received radar data 105 represents reflected radar signals received by the communication system 100. Based on these reflected radar signals, the processor 102 determines characteristics of one or more objects in proximity of the communication system 100, such as object velocity, object range, object direction, and the like.

The radar control module 104 is a set of circuits that together are configured to generate radar waveforms, such as radar waveform 112, for transmission. In some embodiments, the radar control module 104 generates OFDM waveforms-that is, waveforms suitable for transmission via a set of OFDM symbols. For example, in some embodiments, the radar control module 104 generates a set of signal samples for transmission.

The frame assembler 110 is a set of circuits configured to receive radar waveform data (e.g., radar waveform 112) and communication data (e.g., communication data 114) and further configured to combine the received data into frames (e.g., communication and radar frame 116) for transmission by the transmitter 106. To illustrate via an example, it is assumed that in some embodiments the frame assembler 110 is configured to assemble OFDM frames, wherein each OFDM frame is of a specified length (e.g., 10 ms) and is composed of a specified number of slots (e.g., ten slots, twenty slots, forty slots, or eighty slots), and wherein each slot is composed of a specified number of symbols (e.g., 14 symbols). The frame assembler 110 assembles one or more of the frames (e.g., frame 116) to include both communication symbols (that is, symbols that carry at least a portion of communication data 114) and sensing symbols (that is, symbols that carry at least a portion of the samples of radar waveform 112 to be used for radar sensing). The frame assembler 110 provides the assembled frames to the transmitter 106, which transmits the combined frames via one or more signals.

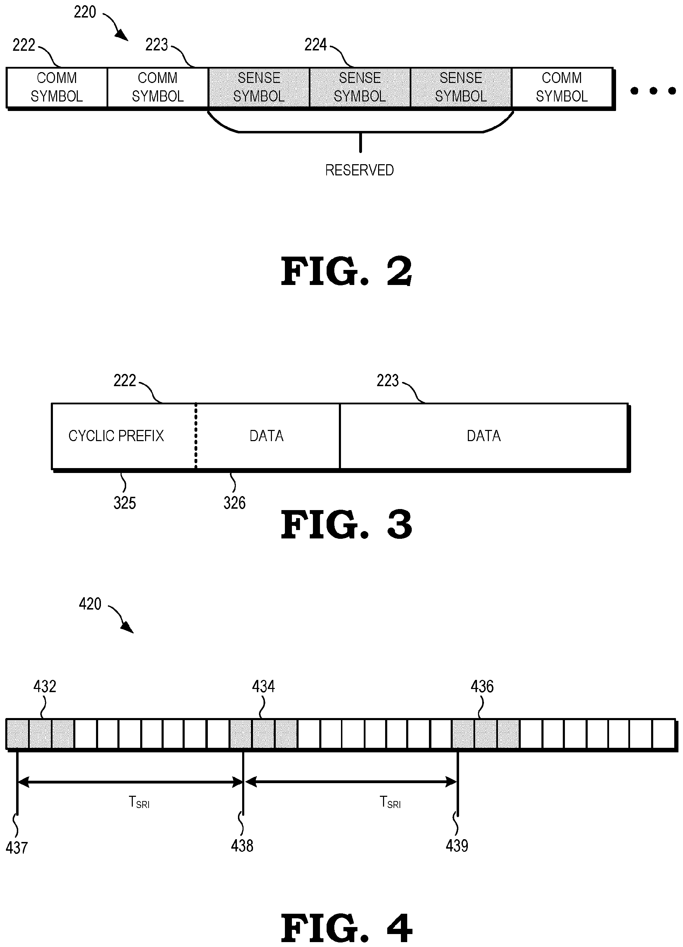

An example of a portion 220 of the combined communication and radar frame 116 is illustrated at FIG. 2 in accordance with some embodiments. In the illustrated embodiment, the portion 220 of the frame 116 includes both communication symbols, such as communication symbols 222 and 223, and sense symbols, such as sense symbol 224.

An example of the communication symbols 222 and 223 are illustrated at FIG. 3 in accordance with some embodiments. In the illustrated example, the symbol 223 carries only communication data, but the symbol 222 carries both data 326 and a cyclic prefix 325. The cyclic prefix 325 is mandated by some communication protocols to, for example, account for the channel maximum delay. However, for some communication protocols, the length of the cyclic prefix varies between different communication symbols. For example, under the 5G New Radio (NR) standard, the frames of a fixed period (for example, 10 ms) are constructed with OFDM symbols. The structure of each frame is built based on the characteristics of the OFDM signal, such as subcarrier spacing, number of subcarriers, and cyclic prefix (CP) length. The CP length is set to cover the channel maximum delay; however, this length is not the same for all OFDM symbols. The CP is classified into long and short CPs. The short CP is based on the maximum channel delay requirement and most of the OFDM symbols in a frame carry a short CP. The long CP occurs periodically along the frame. In 5G NR, this type of CP occurs once every half-subframe (0.5 ms) and also allows for padding samples in order to satisfy a specified frame duration.

The varying lengths of the CPs presents challenges for combining sensing and communication symbols into the same set of frames. For example, in order for the processor 102 to accurately determine the velocity of detected objects, it is desirable that radar samples are equally spaced in time by a specified symbol repetition interval $T_{SRI}$. This equidistant placement ensures that the phase used by the processor 102 to estimate the velocity is linearly increasing over consecutive OFDM symbols. However, due to the different CP lengths, this equidistant property is not ensured if the radar samples are always placed in the same location within a set of sensing symbols. Placing the radar samples in this way restricts the possible measurable velocities. For example, since the maximum velocity that is detectable by the processor 102 is given by the expression $v_u = \dfrac{\lambda}{2T_{SRI}}$, which is inversely proportional to $T_{SRI}$, the maximum velocity $v_u$ cannot be increased if $T_{SRI}$ is already fixed.

Accordingly, to address these limitations and support equidistant sensing symbols, the frame assembler 110 is configured to reserve additional sensing symbols in each frame, above the number of symbols needed to store the radar samples. For example, in the illustrated embodiment of FIG. 2, the frame assembler 110 has reserved three sensing symbols in the portion 220 of the frame 116, even though only two symbols are of sufficient size to store the radar samples for transmission. To ensure equidistant sensing symbols, the frame assembler 110 adjusts the position of the start of the radar samples that will be used for radar processing by the processor 102. In particular, the frame assembler 110 adjusts the position of the start of the radar samples so that each pair of radar samples is equidistant in time, with the interval between sets of radar samples based on the specified maximum velocity $T_{SRI}$. An example of this equidistance is illustrated at FIG. 4 in accordance with some embodiments.

FIG. 4 illustrates a communication stream 420, including a plurality of frames formed by the frame assembler 110. The plurality of frames includes three sets of sensing symbols, designated set 432, set 434 and set 436. Each of the sets 432, 434, and 436 is followed by sets of communication symbols to form the stream 420. That is, the stream 420 is a combination of sensing symbols and communication symbols for transmission by the transmitter 106.

Each of the sets 432, 434, and 436 includes a set of radar samples. For example, in some embodiments each set of sensing symbols includes at least $2N_{fft}$ samples, where $N_{fft}$ is the OFDM fast Fourier transform (FFT) length. In some embodiments, the first $N_{fft}$ samples are a copy of the next $N_{fft}$ samples in order to satisfy the maximum unambiguous range. Because there are more than $2N_{fft}$ samples available in each of the sets 432, 434, and 436, the position of the start of the $2N_{fft}$ samples can be adjusted within each set by the frame assembler 110 so that the samples are equidistant across the sets 432, 434, and 436. In the embodiment of FIG. 4, the start of each set of $2N_{fft}$ samples is denoted by a line. In particular, line 437 indicates the start of the $2N_{fft}$ samples at set 432, line 438 indicates the start of the $2N_{fft}$ samples at set 434, and line 439 indicates the start of the $2N_{fft}$ samples at set 436. As shown, the frame assembler 110 has positioned the start of each set of samples so that each pair of consecutive samples are separated by the interval $T_{SRI}$. Thus, the frame assembler 110 positions the radar samples to be equidistant in the stream 420, and thereby supports accurate determination of the velocity of detected objects by the processor 102.

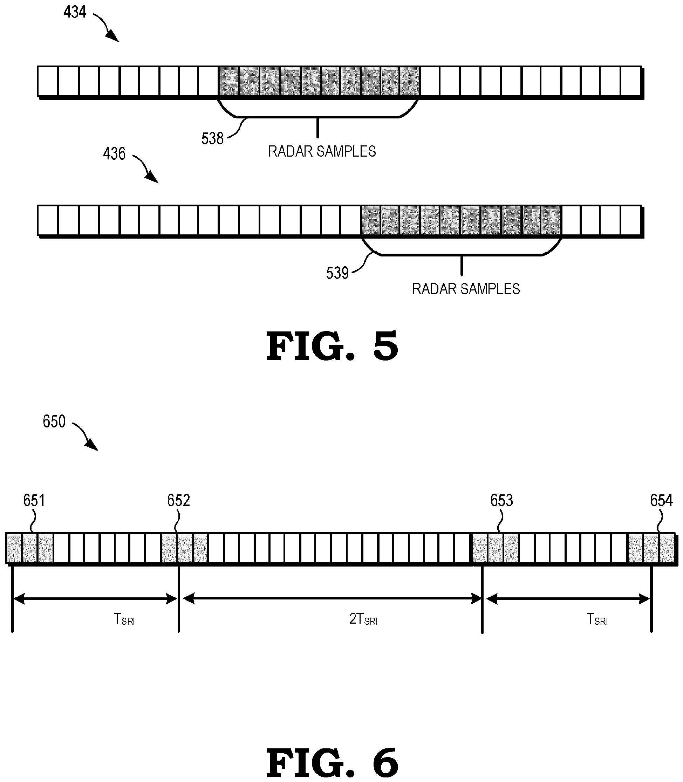

In order to ensure that the radar samples are equidistant, in some cases the frame assembler 110 positions the start of the $2N_{fft}$ samples differently within different sets of sensing symbols. An example is illustrated at FIG. 5 in accordance with some embodiments. In particular, FIG. 5 illustrates the set 434 of radar symbols and the set 436 of radar symbols. The set 434 includes radar samples 538 while the set 436 includes radar samples 539. Each of the sets 434 and 436 includes space, or positions, for thirty samples and the radar samples are positioned differently within each set. For example, the frame assembler 110 has placed the start of the radar samples 538 at the tenth sample position of the set 434 and has placed the start of the radar samples 539 at the seventeenth position of the set 436. Thus, for different sets of sensing symbols, the frame assembler 110 positions the start of the corresponding radar samples at different positions within the sets in order to ensure that the start of the radar samples are spaced equally in time.

In some cases, the use of symbol space in the stream of data transmitted by the communication system 100 undesirably reduces the communication bandwidth of the system. Accordingly, in some embodiments, the frame assembler 110 is configured to "skip" designated intervals by not including radar symbols in frames corresponding to those intervals, and instead placing communication data in locations that would otherwise be employed for sensing symbols. This increases the communication bandwidth of the communication system 100, while somewhat reducing the accuracy of the system's radar detection. An example is illustrated at FIG. 6 in accordance with some embodiments.

FIG. 6 illustrates a stream 650 of data transmitted by the communication system 100. The stream 650 includes four sets of radar symbols, designated set 651, set 652, set 653, and set 654. The sets 651-654 are placed by the frame assembler 110 in the stream 650 so that the radar samples between two consecutive sets are separated in time by a multiple of interval $T_{SRI}$. Thus, the separation (in time) between the samples of the set 651 and the set 652 is the interval $T_{SRI}$. Similarly, the frame assembler 110 has positioned the samples of the sets 653 and 654 so that interval between the samples is the interval $T_{SRI}$. However, the frame assembler 110 has positioned the samples of the sets 652 and 653 so that interval between the samples is the interval $2T_{SRI}$. That is, the interval between the radar samples of the sets 652 and 653 is twice that of the interval between the radar samples of the sets 651 and 652. Thus, in some embodiments, the frame assembler periodically extends the interval between sets of radar samples to be a multiple of the interval $T_{SRI}$, thereby increasing the amount of communication data (e.g., the number of 5G symbols) transmitted in a given amount of time, and thus increasing the communication bandwidth of the communication system 100. The frame assembler 110 also maintains the interval $T_{SRI}$ between at least some consecutive sets of radar samples and thus maintains a specified radar sensing performance level.

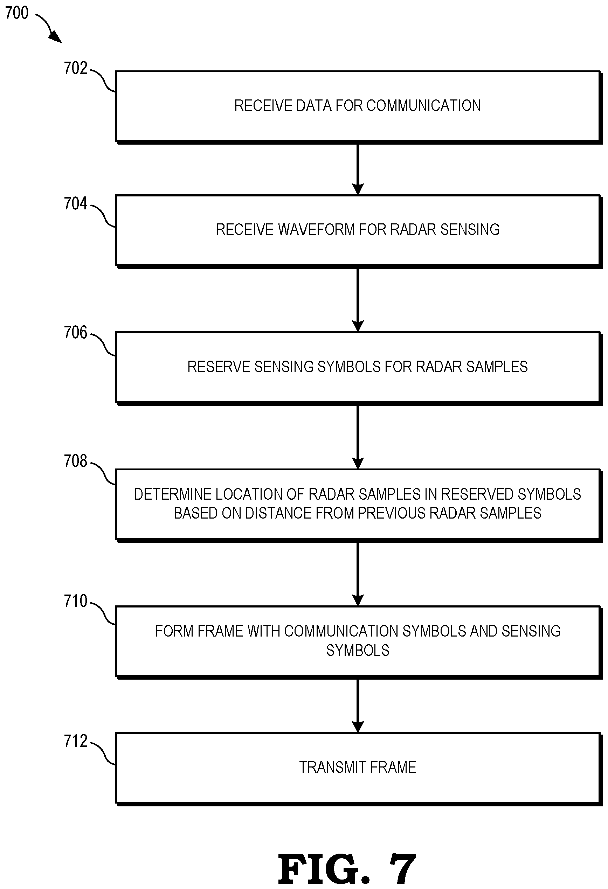

FIG. 7 illustrates a flow diagram of a method 700 of setting the position of radar samples in a set of reserved radar symbols at a communication system in accordance with some embodiments. The method 700 is described below with respect to an example implementation at the communication system 100 of FIG. 1. However, it will be appreciated that in other embodiments the method 700 is implemented at communication systems and devices having different configurations.

At block 702, the frame assembler 110 receives communication data 114, representing data to be transmitted wirelessly by the transmitter 106. In addition, at block 704 the frame assembler 110 receives the radar waveform 112, representing radar samples to be transmitted by the transmitter 106. At block 706, the frame assembler 110 reserves a specified number of symbols in a frame for the radar samples. For example, in some embodiments the frame assembler 110 reserves three consecutive symbols of a frame as sense symbols. The frame assembler 110 reserves enough sense symbols so that the position of the samples in the sense symbols can be adjusted without loss of any samples.

At block 708, the frame assembler 110 positions the radar samples within the sense symbols based on the interval between the previous set of radar samples. For example, in some embodiments the frame assembler 110 positions the radar samples so that the interval between transmission of the last radar sample from the previous set of sense symbols and transmission of the first radar sample of the current set of radar samples is equal to a specified interval $T_{SRI}$. The frame assembler 110 thus ensures that sets of radar samples are transmitted by the transmitter 106 at equal intervals. At block 710 the frame assembler 110 assembles the frame 116 with both communication symbols and radar symbols. At block 712, the transmitter 106 transmits the frame 116.

As disclosed herein, in some embodiments a method includes reserving a first portion of a transmitted frame for communication symbols and a second portion of the transmitted frame for a plurality of radar sensing symbols, wherein the communication symbols are of variable length; and setting a position of a first symbol of the radar sensing symbols so that at least a first subset of the plurality of radar sensing symbols are equidistant in the transmitted frame. In one aspect, setting the position includes: identifying a position of a second symbol of the radar sensing symbols in the frame; and adjusting the position of the first symbol based on the position of the second symbol. In another aspect, adjusting the position includes adjusting the position of the first symbol within the second portion. In another aspect, the second portion includes at least three consecutive symbols of the transmitted frame.

In one aspect, setting the position of the first symbol includes setting the position of the first symbol based on a specified maximum velocity to be detected by the radar sensing symbols. In another aspect, the method includes: setting each of the plurality of radar sensing symbols based on the specified maximum velocity. In yet another aspect, a distance between a second symbol and a third symbol of the radar sensing symbols is based on a multiple of the specified maximum velocity, and the second symbol and the third symbol are consecutive radar sensing symbols in the transmitted frame. In still another aspect, the method includes setting a position of a second symbol of the radar sensing symbols so that the plurality of radar sensing symbols are equidistant in the transmitted frame, wherein the position of the first symbol in a first subset of symbols is different than the position of the second symbol in a second subset of symbols. In another aspect a first of the communication symbols has a different length than a second of the communication symbols.

In some embodiments, a method includes: generating a plurality of communication symbols and a plurality of radar sensing symbols; generating a frame by spacing the plurality of radar sensing symbols between the plurality of the communication symbols so that at least a first subset of the plurality of radar sensing symbols are equidistant in the frame; and transmitting the frame. In one aspect, generating the frame includes: identifying a position of a first symbol of the radar sensing symbols in the frame; and adjusting the position of a second symbol based on the position of the first symbol. In another aspect, adjusting the position of the second symbol includes setting the position of the second symbol based on a specified maximum velocity to be detected by the radar sensing symbols.

In some embodiments, a device includes: a processor configured to: reserve a first portion of a frame for communication symbols and a second portion of the frame for a plurality of radar sensing symbols, wherein the communication symbols are of variable length; and set a position a first symbol of the radar sensing symbols so that at least a first subset of the plurality of radar sensing symbols are equidistant in the frame; and a transmitter to transmit the frame. In one aspect, the processor is to set the position by: identifying a position of a second symbol of the radar sensing symbols in the frame; and adjusting the position of the first symbol based on the position of the second symbol. In another aspect, adjusting the position includes adjusting the position of the first symbol within the second portion.

In one aspect, the second portion includes at least three consecutive symbols of the frame. In another aspect, the processor is to set the position by setting the position of the first symbol based on a specified maximum velocity to be detected by the radar sensing symbols. In one aspect, the processor is configured to: set each of the plurality of radar sensing symbols based on the specified maximum velocity. In another aspect, a distance between a second symbol and a third symbol is based on a multiple of the specified maximum velocity, and wherein the second symbol and the third symbol are consecutive radar sensing symbols in the frame. In still another aspect, the communication symbols include orthogonal frequency-division multiplexing (OFDM) symbols.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1.  A method comprising:

    reserving a first portion of a transmitted frame for communication symbols and a second portion of the transmitted frame for a plurality of radar sensing symbols, wherein the communication symbols are of variable length; and
    setting a position of a first symbol of the radar sensing symbols so that at least a first subset of the plurality of radar sensing symbols are equidistant in the transmitted frame.

2.  The method of claim 1, wherein setting the position comprises:

    identifying a position of a second symbol of the radar sensing symbols in the frame; and
    adjusting the position of the first symbol based on the position of the second symbol.

3.  The method of claim 2, wherein adjusting the position comprises adjusting the position of the first symbol within the second portion.

4.  The method of claim 3, wherein the second portion comprises at least three consecutive symbols of the transmitted frame.

5.  The method of any preceding claim, wherein setting the position of the first symbol comprises setting the position of the first symbol based on a specified maximum velocity to be detected by the radar sensing symbols.

6.  The method of claim 5, further comprising:
    setting each of the plurality of radar sensing symbols based on the specified maximum velocity.

7.  The method of claim 6, wherein:
    a distance between a second symbol and a third symbol of the radar sensing symbols is based on a multiple of the specified maximum velocity, and wherein the second symbol and the third symbol are consecutive radar sensing symbols in the transmitted frame.

8.  The method of any preceding claim, further comprising setting a position of a second symbol of the radar sensing symbols so that the plurality of radar sensing symbols are equidistant in the transmitted frame, wherein the position of the first symbol in a first subset of symbols is different than the position of the second symbol in a second subset of symbols.

9.  The method of any preceding claim, wherein a first of the communication symbols has a different length than a second of the communication symbols.

10. A device comprising:

    a processor configured to:

        reserve a first portion of a frame for communication symbols and a second portion of the frame for a plurality of radar sensing symbols, wherein the communication symbols are of variable length; and
        set a position a first symbol of the radar sensing symbols so that at least a first subset of the plurality of radar sensing symbols are equidistant in the frame; and

    a transmitter to transmit the frame.

11. The device of claim 10, wherein the processor is to set the position by:

        identifying a position of a second symbol of the radar sensing symbols in the frame; and adjusting the position of the first symbol based on the position of the second symbol.

12. The device of claim 11, wherein adjusting the position comprises adjusting the position of the first symbol within the second portion.

13. The device of claim 12, wherein the second portion comprises at least three consecutive symbols of the frame.

14. The device of any of claims 10 to 13, wherein the processor is to set the position by setting the position of the first symbol based on a specified maximum velocity to be detected by the radar sensing symbols.

15. The device of claim 14, wherein the processor is configured to:
set each of the plurality of radar sensing symbols based on the specified maximum velocity.

**FIG. 1**

EP 4 586 536 A1

220

222 ∕

223 ∕

224 ∕

| COMM SYMBOL | COMM SYMBOL | SENSE SYMBOL | SENSE SYMBOL | SENSE SYMBOL | COMM SYMBOL | • • • |

RESERVED

# FIG. 2

222 ∕

223 ∕

| CYCLIC PREFIX | DATA | DATA |

325

326

# FIG. 3

420

432

434

436

$T_{SRI}$

$T_{SRI}$

437

438

439

# FIG. 4

434

538
RADAR SAMPLES

436

539
RADAR SAMPLES

# FIG. 5

650

651 652 653 654

$T_{SRI}$      $2T_{SRI}$      $T_{SRI}$

# FIG. 6

700

702 — RECEIVE DATA FOR COMMUNICATION

704 — RECEIVE WAVEFORM FOR RADAR SENSING

706 — RESERVE SENSING SYMBOLS FOR RADAR SAMPLES

708 — DETERMINE LOCATION OF RADAR SAMPLES IN RESERVED SYMBOLS BASED ON DISTANCE FROM PREVIOUS RADAR SAMPLES

710 — FORM FRAME WITH COMMUNICATION SYMBOLS AND SENSING SYMBOLS

712 — TRANSMIT FRAME

# FIG. 7

Europäisches
Patentamt

European
Patent Office

Office européen
des brevets

# EUROPEAN SEARCH REPORT

**Application Number**

EP 24 21 5421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/102301 A1 (QUALCOMM INC [US]) 8 June 2023 (2023-06-08) | 1-4,8-13 | INV. H04L5/00 G01S13/42 |
| A | * paragraphs [0004], [0012], [0022], [0025], [0017], [0082], [0008]; figures 4, 8A * | 5-7,14, 15 | |
| A | WO 2023/113930 A2 (QUALCOMM INC [US]) 22 June 2023 (2023-06-22) * paragraphs [0035], [0116] * | 1,10 | |
| A | US 2023/309144 A1 (ZHU PEIYING [CA] ET AL) 28 September 2023 (2023-09-28) * paragraph [0378] * | 1,10 | |

TECHNICAL FIELDS
SEARCHED (IPC)

H04L

The present search report has been drawn up for all claims

| Place of search | Date of completion of the search | Examiner |
|---|---|---|
| The Hague | 10 June 2025 | Anghel, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 24 21 5421

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | | Publication date |
|---|---|---|---|---|
| WO 2023102301 A1 | 08-06-2023 | CN | 118355285 A | 16-07-2024 |
| | | EP | 4441522 A1 | 09-10-2024 |
| | | KR | 20240115813 A | 26-07-2024 |
| | | US | 2024369678 A1 | 07-11-2024 |
| | | WO | 2023102301 A1 | 08-06-2023 |
| WO 2023113930 A2 | 22-06-2023 | CN | 118369897 A | 19-07-2024 |
| | | EP | 4449684 A2 | 23-10-2024 |
| | | KR | 20240118071 A | 02-08-2024 |
| | | US | 2024345214 A1 | 17-10-2024 |
| | | WO | 2023113930 A2 | 22-06-2023 |
| US 2023309144 A1 | 28-09-2023 | CN | 116548002 A | 04-08-2023 |
| | | EP | 4248696 A1 | 27-09-2023 |
| | | JP | 7648316 B2 | 18-03-2025 |
| | | JP | 2024504011 A | 30-01-2024 |
| | | US | 2023309144 A1 | 28-09-2023 |
| | | WO | 2022133951 A1 | 30-06-2022 |

EPO FORM P0459

For more details about this annex : see Official Journal of the European Patent Office, No. 12/82